# EUROPEAN PATENT SPECIFICATION

(11) **EP 0 271 066 B1**
(45) Date of publication and mention of the grant of the patent: **07.04.1993**
(21) Application number: 87118172.3
(22) Date of filing: 08.12.1987
(51) Int. Cl.: B29C 55/08, B29C 63/00, B29D 7/01

(54) **Method of preventing expansioninduced wrinkles of plastic film and metal foil**
Methode zur Vermeidung von durch Ausdehnung bewirkten Falten in Kunststoffilmen und Metallfolien
Méthode pour la prévention de plis causés par l'expansion de pellicules plastiques et feuilles métalliques

(30) Priority: 12.12.1986 JP 297057/86
(43) Date of publication of application: 15.06.1988
(73) Proprietor: KANEGAFUCHI KAGAKU KOGYO KABUSHIKI KAISHA, Kita-ku Osaka-shi Osaka-fu 530 (JP)
(72) Inventor: Kido, Masaro, Ohtsu-shi Shiga-ken (JP); Noguchi, Takehiko, Nagaokakyo-shi Kyoto-fu (JP)
(74) Representative: VOSSIUS & PARTNER

(56) References cited:
- EP-A- 0 144 822
- EP-A- 0 167 628
- DE-A- 3 507 916
- GB-A- 2 175 246
- DERWENT ABSTRACTS, no. 86322552, Derwent Publications Ltd, London, GB; & JP-A-61 239 426 (MITSUBISHI DENKI K.K.) 24-10-1986
- DERWENT ABSTRACTS, no. 80889270, Derwent Publications Ltd, London, GB; & JP-A-55 137 920 (TOYO INK. MFG. K.K.) 29-10-1980
- PATENT ABSTRACTS OF JAPAN, vol. 5, no. 105 (M-77)[777], 8th July 1981; & JP-A-56 49 224 (KOBE SEIKOSHO K.K.) 02-05-1981
- PATENT ABSTRACTS OF JAPAN, vol. 10, no. 18 (M-448)[2075], 24th January 1986; & JP-A-60 178 031 (TORAY K.K.) 12-09-1985

## Description

The present invention relates to a method of preventing expansion-induced wrinkles which take place when a plastic film or metal foil comes into contact with a heated roll which is used in methods or devices for hot lamination or the like.

As a means of preventing thermal expansion-induced wrinkles of a plastic film or metal foil due to contact with a heated roll, there exists a method of preheating such film or foil before it comes into contact with the heated roll. By this method, however, especially when the material is a thin plastic film up to 200µm or thin metal foil up to 100µm in thickness, wrinkles along the machine's running direction are inevitable upon the preheating due to the lack of mechanical properties. In such a case an attempt to prevent expansion-induced wrinkles eventually results in enhanced wrinkles, hence this preheating method is not satisfactory, either.

EP-A-0 144 822 describes a method for continuously producing laminates in which a preheated metal foil is brought into contact with a roll heated to the same temperature while subjecting the foil to tension in the transverse direction.

It is an object of the present invention to provide a method for preventing the above-mentioned expansion-induced wrinkles.

This object is achieved by the method according to the claims.

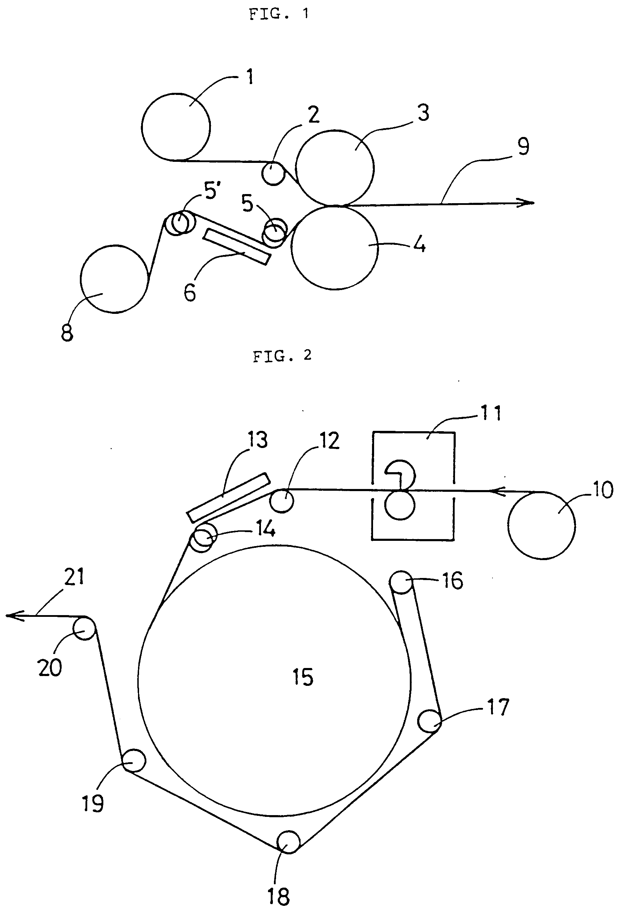

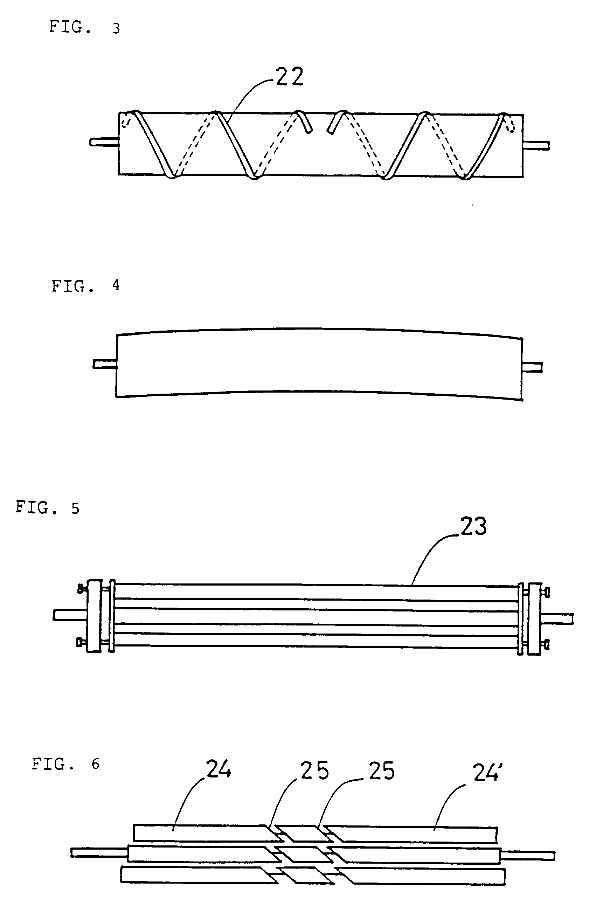

The invention will be described in detail in connection with the drawings in which
Figs. 1 and 2 are schematic views showing examples of devices suited for the method of the present invention, and Figs. 3 through 6 are further schematic views showing examples of devices for tensioning the film or foil in the transverse direction.

The present invention provides a method of preventing the expansion- induced wrinkles of a plastic film or metal foil, wherein the plastic film or metal foil is, as it comes into contact with a roll heated to 100°C or more, first tensioned in the transverse direction, then preheated to not less than 100°C but not more than 50 °C above that of the roll in question and thereafter further tensioned in the transverse direction before contacting the heated roll.

The present invention is applicable to all sorts of plastic films and metal foils, but is particularly suited for the so-called heat-resistant films e.g. polyethylene terephthalate film, aromatic polyamide film, polyimide film, polyamideimide film, fluorocarbon film, polyparabanic acid film, polyetheretherketone film, polyethersulfone film and polycarbonate film. Plastic films in excess of 200µm in thickness are practically free of expansion-induced wrinkles due to their high mechanical properties, hence the present invention is useful especially for plastic films up to 200 µm in thickness.

As metal foils for which this invention is useful are exemplified, among others, copper foil, aluminum foil, nickel foil and stainless steel foil. Metal foils in excess of 100 µ m in thickness are practically free of expansion-induced wrinkles due to their high mechanical properties, hence the present invention is useful especially for metal foils up to 100 µm in thickness.

Although rolls heated to 100 °C or more referred to in the present invention are widely in use in various branches of the industry, the present invention is useful where e.g. a hot roll is used for hot lamination or a hot roll is used as a dryer for a base material coated with adhesive, synthetic resin solution, or the like.

As pre-heaters for plastic films or metal foils referred to in this invention are exemplified, among others, outside heaters such as far infrared ray heater and blast heater and inside heaters such as micro-wave heater. As to the temperature of the preheated plastic film or metal foil, it is preferred that this temperature be close to that of the roll with which the film or foil comes into contact but, on the other hand, when the roll temperature is as high as 200-250°C, a considerable effect is attainable even when the temperature of the preheated film or foil is substantially lower, e.g. 100-150 °C. Hence, when the temperature of the roll is 100 °C or above, it suffices that the temperature of either plastic film or metal foil is 100 °C or more. Meanwhile, when the preheating temperature is higher than 50 °C above the roll temperature, necking, deformation, discoloration or undue expansion-induced wrinkles which will seriously interfere with tensioning in the transverse direction in the next step may result in the case of a plastic film, and discoloration or undue expansion-induced wrinkles which will seriously interfere with tensioning in the transverse direction in the next step may result in the case of a metal foil, hence it is not advisable to set the pre-heating temperature at more than 50 °C higher than that of the roll.

As devices for tensioning film or foil in the transverse direction metal or rubber rolls are effective such as a spiral roll which has a spiral groove (or crest) 22 in its surface (Fig. 3), a so-called banana expander roll (Fig. 4), a flat expander roll with which the degree or extent of tensioning is changeable through adjustment of the length of the rubber layer 23 on the roll surface (Fig. 5, manufacturer: Shinko K. K.) and a level expander roll which has an increasing gap 25, which, in turn, increases with rotation of its movable parts 24 24' in the predetermined directions (Fig. 6, manufacturer: Shinko K. K.). Since they are exposed to, more or less, high temperatures, it is advisable to choose a metal expander roll. When the above-mentioned tensioning device is used prior to preheating of plastic film or metal foil, however, rubber rolls may as well be used safely. Meanwhile, as a device for tensioning in the transverse direction besides the above-mentioned expander roll, a tenter equipped with holding means such as grips may as well be used. In the present invention, the intensity of tensioning may suffice if it is enough for removing wrinkles already formed, and even if a plastic film or foil is elongated by tensioning, elongation is up to 0.5 % based on the original size.

Figs. 1 and 2 show examples embodying the present invention for hot lamination respectively. Explained below is a case of hot lamination in which a commercially available polyimide film (trade name "Apical AH" 25µm thick, manufacturer: Kanegafuchi Kagaku Kogyo K.K.) is laminated with a commercially available FEP film (trade name: "Neoflon" film, 12.5 µm thick, manufacturer: Daikin Kogyo K. K.) one upon another.

Referring to Fig. 1, reference numeral 1 designates a payoff roll for FEP film, 8 another payoff roll for polyimide film, 4 a roll heated to 200∼250 °C, 3 a silicone rubber roll, 6 a heater and 5 and 5' rolls for tensioning in the transverse directions, respectively. The heater 6 is so adjusted that the polyimide film from the payoff roll 8 is heated up to 150∼250°C before it comes into contact with the heated roll 4. In the above-described device the polyimide film unwound from the payoff roll 8 is tensioned in the transverse direction by the sideway tensioning roll 5' and, after being heated to 150∼250°C by the heater 6, is led through between the heating roll 4 and the silicone rubber roll 3 being tensioned by the sideway tensioning roll 5 in the transverse direction, while the FEP film unwound from the payoff roll 1 is led through between the heated roll 4 and the silicone rubber roll 3 where both films are pressure-bonded under heating to give a laminated film 9 which it is wound up.

Fig. 2 shows an example of a device embodying the present invention, in which aluminum foil is coated with polyimide resin solution and is subsequently dried.

In Fig. 2, reference numeral 10 designates a payoff roll for aluminum foil, 11 a coating section, 12 a sideway tensioning roll, 13 a heater, 14 a sideway tensioning roll, 15 a heated drum, and 16∼20 guide rolls, respectively. The aluminum foil from the payoff roll 10 is coated with polyimide resin solution in the coating section 11, and after being heated by the heater 13 while being tensioned in the transverse direction by the sideway tensioning roll 12, the foil is tensioned in the transverse direction by the sideway tensioning roll 14, then heated over the heated drum 15 and thus an intermediate, pre-baked product 21 with its solid content increased is obtained.

The present invention is further explained below by way of examples, but it is to be clearly understood that the scope of the invention is by no means limited thereby.

### Example 1

An aluminum foil 300 mm wide and 10µm thick was coated with a polyimide varnish ("Torenese # 2000" manufacturer: Toray K. K.) by the use of a comma coater with its clearance adjusted to 20µm at a rate of 5 m/min. Before drying the material over a drum 1 meter in diameter and heated to 150 °C, the aluminum foil coated with polyimide varnish was preheated for 10 seconds in a heating furnace whose temperature was set at 130°C, while being tensioned in the transverse direction, and then led through between metal spiral rolls, and a polyimide varnish-coated aluminum foil heated to 115 °C was thus obtained. This aluminum foil coated with polyimide varnish was dried over a drum heated to 150 °C. The aluminum foil with its surface covered with a dried layer of polyimide was cured in a drying oven for 1 minute at 400°C for baking to be finished. The product thus obtained was suited as a raw foil for a speaker's vibrating plate.

### Reference example 1

An aluminum foil with a polyimide layer formed thereon was obtained in substantially the same way as described above under Example 1 but without the use of the heating furnace for preheating and the metal spiral roll for tensioning. The coated aluminum foil was inferior in appearance with wrinkles caused by expansion due to passage over the heated drum.

### Example 2

In hot laminating at a line speed of 10 m/min fluoroethylene-propylene copolymer (FEP) film 12.5 µm thick and 1,010 mm wide ("Neoflon" film, manufacturer: Daikin Kogyo K. K.) on polyimide film 25 µm thick and 1,020 mm wide ("Apical AH", manufacturer: Kanegafuchi Kagaku Kogyo K.K.), the polyimide film was first preheated to 240 °C in a heating furnace, while being tensioned in the transverse direction, then it was tensioned in the transverse direction by means of a metal level expander, the film so tensioned was fed along the surface of a lower roll heated to 240°C, which together with an upper silicone rubber roll comprises a press roll, while the FEP film was fed along the surface of the upper silicone rubber roll, and both films were laminated as they passed through the press rolls. The appearance of the laminated film was quite fine with no trace of wrinkles. This film was cut into tapes and was used as copper wire sheath, and the wire so finished was good for use as cable coil.

### Reference example 2

A like laminated film was obtained in substantially the same way as described above under Example 2 but without the use of the above-mentioned preheater and level expander. This film was seen having expansion-induced wrinkles in its surface and was inferior in appearance, also showing indication of air bubble inclusion.

### Reference example 3

A like laminated film was obtained in substantiously the same way as described above under Example 2 but without the use of the above-mentioned level expander. The product obtained was inferior also having indication of expansion-induced wrinkles and included air bubbles.

### Example 3

On the polyimide side of the laminated film obtained in Example 2 another layer of FEP film 12.5 µm thick was hot-laminated at a line speed of 10 m/min in the same way as described in Example 2 above to obtain a 3-layer laminated film. That is, before feeding the laminated film of Example 2 with the FEP film side down along the surface of a roll heated to 220°C, it was preheated to 150 °C, while being tensioned in the transverse direction, and was subjected to sidewise tension by the use of a metal level expander. Meanwhile, the FEP film to be newly laminated was fed along the surface of the upper silicone rubber roll and was laminated on the film tensioned in the transverse direction on a press roll. This 3-layer laminated film was wound up by a winder. The appearance of the wound up film had no wrinkles and looked quite fine. The film, cut into tapes, was coiled round copper wire spirally, and the wire so sheathed was suited for use as cable or coil.

## Claims

1. A method for preventing expansion-induced wrinkles of a plastic film or metal foil as it is brought into contact with a roll heated to at least 100 °C which method comprises subjecting the plastic film or metal foil to tension in the transverse direction, then preheating the plastic film or metal foil to a temperature of at least 100 °C but not more than 50 °C above that of said roll, and then bringing it into contact with said roll while subjecting it to tension in the transverse direction.

2. The method of claim 1, wherein the plastic film is of polyethyleneterephthalate, aromatic polyamide, polyimide, polyamideimide, fluorocarbon resin, polyparabanic acid, polyetheretherketone, polyethersulfone or polycarbonate.

3. The method of claim 1 or 2, wherein the thickness of the plastic film is 200µm or less.

4. The method of claim 1 or 2, wherein the metal foil is of copper, aluminum, nickel or stainless steel.

5. The method of claim 1, 2 or 4, wherein the thickness of the metal foil is 100µm or less.

## Patentansprüche

1. Verfahren zur Vermeidung von durch Ausdehnung bewirkten Falten in einem Kunststoffilm oder einer Metallfolie, wenn diese(r) mit einer auf mindestens 100°C aufgeheizten Walze in Berührung gebracht wird, wobei das Verfahren aufweist: Ausüben einer Spannung in Querrichtung auf den Kunststoffilm oder die Metallfolie, dann Vorheizen des Kunststoffilms oder der Metallfolie auf eine Temperatur von mindestens 100°C aber nicht mehr als 50°C über der der Walze, und dann Inberührungbringen mit der Walze, während auf diese(n) eine Spannung in der Querrichtung ausgeübt wird.

2. Verfahren nach Anspruch 1, wobei der Kunststoffilm aus Polyethylenterephthalat, aromatischem Polyamid, Polyimid, Polyamidimid, Fluorkohlenstoffkunstharz, Polyparabansäure, Polyether-etherketon, Polyethersulfon oder Polycarbonat ist.

3. Verfahren nach Anspruch 1 oder 2, wobei die Dicke des Kunststoffilms 200 µm oder weniger beträgt.

4. Verfahren nach Anspruch 1 oder 2, wobei die Metallfolie aus Kupfer, Aluminium, Nickel oder rostfreiem Stahl ist.

5. Verfahren nach Anspruch 1, 2 oder 4, wobei die Dicke der Metallfolie 100 µm oder weniger beträgt.

## Revendications

1. Procédé pour empêcher la formation de rides par dilatation sur un film de matière plastique ou une feuille de métal au moment de sa venue au contact d'un cylindre chauffé au moins à 100°C, lequel procédé comporte l'application d'une traction du film de matière plastique ou de la feuille de métal dans le sens transversal, puis le préchauffage du film de matière plastique ou de la feuille de métal a une température au moins égale à 100°C mais ne dépassant pas de plus de 50°C celle dudit cylindre, puis son acheminement au contact dudit cylindre tout en le soumettant à une traction dans le sens transversal.

2. Procédé selon la revendication 1, dans lequel le film de matière plastique est en polyéthylènetéréphtalate, en polyamide aromatique, en polyimide, en polyamide imide, en résine de fluorocarbone, en acide polyparabanique, en polyétheréthercétone, en polyéthersulfone ou en polycarbonate.

3. Procédé selon la revendication 1 ou 2, dans lequel l'épaisseur de film de matière plastique ne dépasse pas 200 µm.

4. Procédé selon la revendication 1 ou 2, dans lequel la feuille de métal est en cuivre, en aluminium, en nickel ou en acier inoxydable.

5. Procédé selon la revendication 1, 2 ou 4, dans lequel l'épaisseur de la feuille de métal ne dépasse pas 100 µm.
